# EUROPÄISCHE PATENTANMELDUNG

(11) **EP 1 952 926 A2**
(43) Veröffentlichungstag der Anmeldung: **06.08.2008**
(21) Anmeldenummer: 08000529.1
(22) Anmeldetag: 12.01.2008
(51) Int. Cl.: B23D 45/04, B27G 19/04

(54) **Elektrowerkzeug mit Sicherungseinrichtung**

(30) Priorität: 05.02.2007 DE 202007001875 U
(71) Anmelder: Metabowerke GmbH, 72622 Nürtingen (DE)
(72) Erfinder: Vorwerk, Uwe, 49770 Herzlake (DE)
(74) Vertreter: Gesthuysen, von Rohr & Eggert

(57) **Zusammenfassung**

Gegenstand der Erfindung ist ein Elektrowerkzeug, insbesondere Kappsäge oder Handkreissäge, mit einem elektrischen Antriebsmotor (7) und einem Handgriff (9), mit einem von Hand zu betätigenden Einschaltelement (10) für den Antriebsmotor (7), das vorzugsweise als Ziehgriff ausgeführt und/oder am Handgriff (9) angeordnet ist, und mit einem weiteren von Hand zu betätigenden Schaltelement (11), durch das ohne Handbetätigung das Einschaltelement (10) gesperrt und/oder eine sonstige Sicherungsfunktion des Elektrowerkzeugs aktiviert ist. Dieses ist dadurch gekennzeichnet, daß das Schaltelement (11) ein abnehmbares Bedienteil (13) aufweist und nur bei am Schaltelement (11) vorhandenem Bedienteil (13) das Schaltelement (11) von Hand betätigbar und so das Einschaltelement (10) entsperrbar und/oder die sonstige Sicherungsfunktion des Elektrowerkzeugs deaktivierbar ist.

## Beschreibung

Die Erfindung betrifft ein Elektrowerkzeug, insbesondere eine Kappsäge oder eine Handkreissäge, mit den Merkmalen des Oberbegriffs von Anspruch 1.

Elektrowerkzeuge sind generell Handwerkzeuge oder halbstationäre Werkzeuge. Handwerkzeuge sind z.B. Bohrmaschinen, Schrauber, Bandschleifer, Winkelschleifer, Stichsägen, Handkreissägen, Oberfräsen (siehe z.B. DE-U-202 12 403). Halbstationäre Elektrowerkzeuge sind Tischkreissägen, Kappsägen, Kappund Gehrungssägen, Bandsägen o.dgl., die zwar von Ort zu Ort transportiert werden können, vor Ort aber an einem festen Platz stehen, zu dem dann die zu bearbeitenden Werkstücke gebracht werden (DE-A-103 41 192; DE-A-33 25 211).

Zur Bedienung von Hand hat ein solches Elektrowerkzeug einen Handgriff, an dem es häufig auch einfach getragen werden kann. Natürlich hat ein solches Elektrowerkzeug einen elektrischen Antriebsmotor und ein von diesem elektrischen Antriebsmotor angetriebenes Bearbeitungswerkzeug, beispielsweise ein Kreissägeblatt. Um den elektrischen Antriebsmotor einzuschalten ist ein von Hand zu betätigendes Einschaltelement vorgesehen. Sehr häufig ist dieses Einschaltelement als Ziehgriff oder Betätigungstaste ausgeführt und ebenso häufig ist es am Handgriff angeordnet. Insbesondere bei der Ausführung als Ziehgriff bietet die Anordnung an der Griffschale des Handgriffs eine gute Möglichkeit, zum einen das Elektrowerkzeug am Handgriff sicher mit der Hand zu erfassen, zum anderen die Schließbewegung der Hand intuitiv auch zur Betätigung des Einschaltelementes nutzen zu lassen.

Bei vielen Elektrowerkzeugen ist vorgesehen, daß durch einfaches Betätigen des Einschaltelementes von Hand der elektrische Antriebsmotor noch nicht ohne weiteres eingeschaltet werden kann. Das von Hand zu betätigende Einschaltelement ist zunächst entweder blockiert oder funktionslos. Dann kann man das Elektrowerkzeug gefahrlos am Handgriff tragen, ohne Sorge zu haben, daß der elektrische Antriebsmotor bereits dadurch eingeschaltet wird. Das hat sicherheitstechnische Vorteile.

Um eine solche Funktion hinsichtlich des Einschaltelementes zu erzielen, ist an einem solchen Elektrowerkzeug ein weiteres von Hand zu betätigendes Schaltelement vorgesehen, durch das ohne Handbetätigung das Einschaltelement gesperrt ist. Gesperrt in diesem Sinne heißt blockiert oder wirkungslos, jedenfalls funktionslos hinsichtlich der Beeinflussung des elektrischen Antriebsmotors. Man muß also bewußt von Hand sowohl das Schaltelement als auch das Einschaltelement betätigen, um den elektrischen Antriebsmotor des Elektrowerkzeugs in Gang zu setzen.

Ein besonderes Beispiel eines solchen Schaltelementes ist eine Schlüsselkappe, mit der der an sich ungesicherte Ein/Aus-Schalter eines Elektrowerkzeugs, insbesondere einer Tischkreissäge oder einer Radialarmsäge, abgedeckt und verriegelt werden kann (US-A-3,816,677). Das Einschaltelement ist hier eine Wipptaste, die mittels eines Schlüsselschalters, der Teil der Kappe ist, sperrbar oder freigebbar ist. Man zieht den Schlüssel ab, wenn man das Elektrowerkzeug gegen unberechtigte oder unbeabsichtigte Benutzung sichern möchte.

Die zuvor erläuterte Konstruktion mit einem Schlüsselschalter ist bereits eine erhebliche Verbesserung gegenüber den bislang aus dem Stand der Technik bekannten Vorhängeschloß-Sicherungen von Ziehgriffen an Handgriffen von Elektrowerkzeugen (siehe Spalte 1, Zeilen 43 bis 49 der US-A-3,816,677). Generell gilt für die dort beschriebene Schlüsselsicherung, daß eine Verriegelung des Einschaltelementes durch Krafteinwirkung leichter zerstörbar ist, als wenn die "Sperrung" des Einschaltelementes durch einen Freilauf des Einschaltelementes im gesperrten Zustand verwirklicht wird.

Ein zusätzliches von Hand zu betätigendes Schaltelement gibt es insbesondere auch bei Kappsägen oder Handkreissägen in Form eines Hebelsystems, insbesondere eines doppelarmigen Schwenkhebels, durch den eine Pendelschutzhaube in ihrer Schließlage und das Sägeaggregat insgesamt in seiner angehobenen Stellung gesperrt sind, sofern das Schaltelement nicht von Hand betätigt worden ist. Dadurch läßt sich zwar mittels des Einschaltelementes der elektrische Antriebsmotor einschalten, ein gefährliches Berühren des Kreissägeblattes und/oder eine Verlagerung des Sägeaggregates werden aber solange unterbunden bis bewußt das weitere Schaltelement von Hand betätigt worden ist. Daß beide Betätigungen gleichzeitig unabsichtlich erfolgen, ist hinreichend unwahrscheinlich.

Der Lehre liegt das Problem zugrunde, eine möglichst einfache Sicherung eines Elektrowerkzeugs der in Rede stehenden Art zu erreichen.

Die zuvor aufgezeigte Problemstellung ist gelöst bei einem Elektrowerkzeug gemäß dem Oberbegriff von Anspruch 1 durch die Merkmale des kennzeichnenden Teils von Anspruch 1. Bevorzugte Ausgestaltungen und Weiterbildungen sind Gegenstand der Unteransprüche.

Dem weiteren, zusätzlich vorhandenen Schaltelement wird erfindungsgemäß ein abnehmbares Bedienteil zugeordnet. Nur bei an diesem Schaltelement vorhandenem Bedienteil kann das Schaltelement von Hand betätigt werden. Das Bedienteil des Schaltelements ist also eine Art "Schlüssel", aber eben nicht ein Schlüssel im klassischen Sinne, sondern ein einfaches, einsteckbares, aufrastbares oder anderweitig anbringbares Konstruktionselement. Bei Fehlen des Bedienteils kann das Schaltelement nicht betätigt werden, dementsprechend ist das Einschaltelement gesperrt und/oder die sonstige Sicherungsfunktion des Elektrowerkzeugs, beispielsweise die Verriegelung der Pendelschutzhaube, ist aktiviert.

Nach einer bevorzugten Lehre der Erfindung ist vorgesehen, daß das Schaltelement das Bedienteil und einen vom Bedienteil beaufschlagten Schaltaufnehmer aufweist, der vorzugsweise im Handgriff versenkt angeordnet ist. Der Schaltaufnehmer des Schaltelementes ist hier also dadurch gegen unbeabsichtigte oder unberechtigte Bedienung geschützt, das er von außen nicht, jedenfalls nicht ohne weiteres erreichbar ist. Insbesondere bietet sich hier eine versenkte Anordnung im Handgriff an.

Eine Alternative, die insbesondere in Verbindung mit der Nutzung des Schaltelementes als Sperrelement einer Pendelschutzhaube einer Kappsäge oder Handkreissäge Bedeutung haben könnte, ist ein schwenkbar gelagertes Hebelsystem, insbesondere ausgeführt als zweiarmiger Hebel, dessen Betätigungshebelarm das Bedienteil bildet und insgesamt vom Hebelsystem im übrigen abnehmbar ist. Fehlt dieser Betätigungshebelarm, so gibt es keinen Angriffspunkt für die Hand einer Bedienungsperson und damit ist die Sicherungswirkung erzielt.

Im folgenden wird die Erfindung anhand einer lediglich Ausführungsbeispiele darstellenden Zeichnung näher erläutert. In der Zeichnung zeigt
- Fig. 1: in perspektivischer Ansicht ein Ausführungsbeispiel eines Elektrowerkzeugs, hier in Form einer Kapp- und Gehrungssäge,
- Fig. 2: den Handgriff der Kapp- und Gehrungssäge gemäß Fig. 1 in einer Draufsicht mit angebrachtem Bedienteil (Fig. 2.a)) bzw. abgenommenem Bedienteil (Fig. 2.b)),
- Fig. 3: die schematische Darstellung eines Schaltelements, das als Hebelsystem zur Sperrung der Pendelschutzhaube der Kapp- und Gehrungssäge gemäß Fig. 1 geeignet wäre.

Eingangs ist erläutert worden, daß Elektrowerkzeuge Handwerkzeuge oder halbstationäre Werkzeuge sein können; auf die dortigen Ausführungen darf hingewiesen werden. Das dargestellte Ausführungsbeispiel zeigt eine halbstationäre Säge, nämlich eine Kapp- und Gehrungssäge als bevorzugtes Ausführungsbeispiel eines erfindungsgemäßen Elektrowerkzeugs.

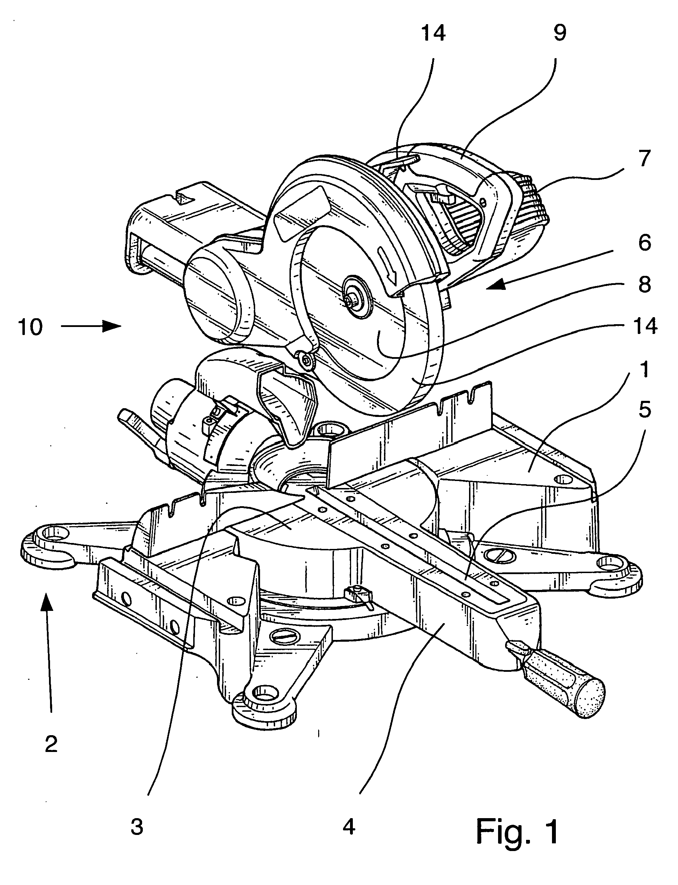

Die in Fig. 1 beispielhaft dargestellte Gehrungssäge weist zunächst eine eine Werkstückauflagefläche 1 bildende Basis 2 auf. Im dargestellten Ausführungsbeispiel ist die Basis 2 als Träger mit einer mittigen Ausnehmung ausgeführt. In die mittige kreisförmige Ausnehmung ist ein Drehteller 3 eingesetzt. Der Drehteller 3 ist an der Basis 2 um seine Hochachse drehbar gelagert. Der Drehteller 3 weist einen Auslegerarm 4 mit einem Eintauchschlitz 5 auf. Am Drehteller 3 ist eine Kapp-Sägeeinrichtung 6 schwenkbar gelagert, wobei deren Schwenkung um eine in der Ebene des Drehtellers 3 verlaufende Schwenkachse erfolgt. Die Kapp-Sägeeinrichtung 6 weist einen Antriebsmotor 7, ein davon angetriebenes Kreissägeblatt 8 sowie einen Betätigungs-Handgriff 9 auf. Letzterer dient dazu, das Kreissägeblatt 8 samt Antriebsmotor 7 zur Ausführung eines Kappschnittes nach unten gegen die Werkstückauflagefläche 1 an Basis 2 und Drehteller 3 zu schwenken. Im einzelnen wird für die Funktionsweise auf die DE-A-103 41 192 und andere einschlägige Veröffentlichungen verwiesen.

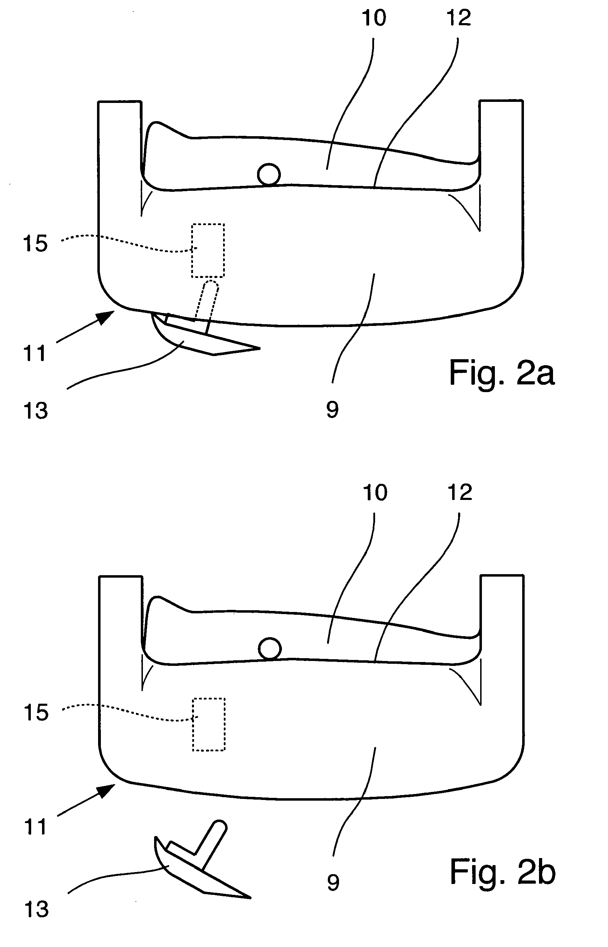

Fig. 2 zeigt in schematischer Darstellung, ausschnittweise und in Draufsicht den Handgriff 9 der Kapp- und Gehrungssäge gemäß Fig. 1. Man erkennt an diesem Handgriff 9 ein von Hand zu betätigendes Einschaltelement 10 für den Antriebsmotor 7. Dieses ist im dargestellten und insoweit bevorzugten Ausführungsbeispiel als Ziehgriff ausgeführt und eben am Handgriff 9 selbst angeordnet. Das ist aber keine zwingende Voraussetzung für die Lehre der vorliegenden Erfindung. Am als Ziehgriff ausgeführten Einschaltelement 10 erkennt man angedeutet noch das durch Nutzung der Lehre der Erfindung überflüssig gewordene Durchsteckloch zum Sichern des Einschaltelementes 10 mittels eines Vorhängeschlosses.

Im dargestellten Ausführungsbeispiel ist weiter vorgesehen ein weiteres von Hand zu betätigendes Schaltelement 11, durch das ohne Handbetätigung das Einschaltelement 10 gesperrt ist. Mit anderen Worten muß das in Fig. 2 unten links zu erkennende, tastenartig ausgeführte Schaltelement 11 mit dem Daumen gedrückt werden, damit mit den übrigen Fingern der Hand der das Einschaltelement 10 bildende Ziehgriff an die Griffschale 12 des Handgriffs 9 herangezogen werden kann, so daß der elektrische Antriebsmotor 7 eingeschaltet wird. Im allgemeinen Teil der Beschreibung ist darauf hingewiesen worden, daß ein solches Schaltelement 11 nicht zwingend nur der Sicherung des Einschaltelementes 10 dienen kann, sondern daß es auch oder zusätzlich eine sonstige Sicherungsfunktion des Elektrowerkzeugs betreffen kann.

Das in Fig. 2 dargestellte Ausführungsbeispiel zeigt nun, daß nach der Lehre der Erfindung das Schaltelement 11 ein abnehmbares Bedienteil 13 aufweist und nur bei am Schaltelement 11 vorhandenem Bedienteil 13 das Schaltelement 11 von Hand betätigbar und so das Einschaltelement 10 entsperrbar und/oder die sonstige Sicherungsfunktion des Elektrowerkzeugs deaktivierbar ist. Fig. 2.a) zeigt das Schaltelement 11 mit angebrachtem Bedienteil 13. In Fig. 2.b) ist das Bedienteil 13 vom Schaltelement 11 im übrigen abgenommen, nämlich dort ausgerastet worden. Man kann das Bedienteil 13 jetzt einfach in die Tasche stecken und mit nach Hause nehmen. Eine Benutzung des Elektrowerkzeugs ist damit unterbunden.

Ohne eine besondere Schlüsselanordnung kann man durch ein einfaches, angepaßtes, abnehmbares Bedienteil 13 eine mechanische Sicherung gegen unbefugte Benutzung des Elektrowerkzeugs realisieren und somit insbesondere auch Unfälle verhindern.

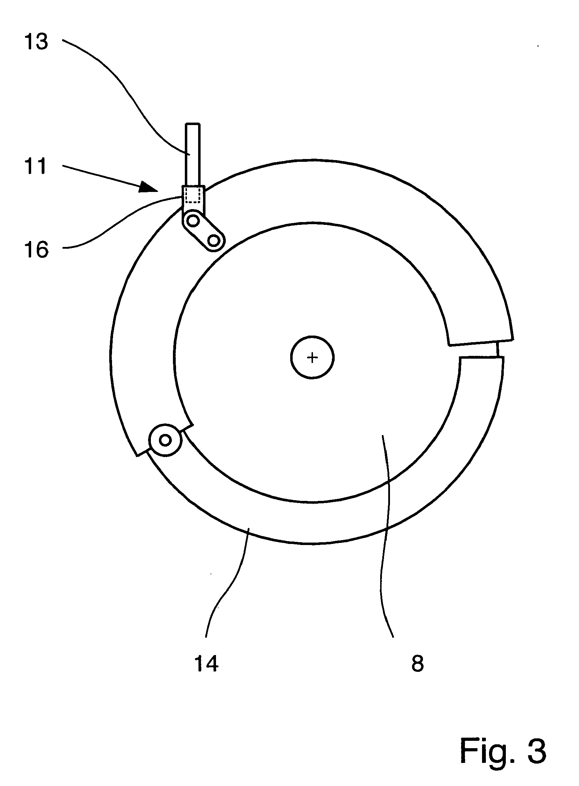

Fig. 3 zeigt eine Variante eines Schaltelements 11, bei der dieses eine sonstige Sicherungsfunktion des Elektrowerkzeugs aktiviert. Hier ist nämlich vorgesehen, daß bei der hier realisierten Kapp- und Gehrungssäge das Schaltelement 11 das Sperrelement einer Pendelschutzhaube 14 der Kapp- und Gehrungssäge ist. In diesem Fall dient das Schaltelement 11 nicht der Sicherung des Einschaltelementes 10, sondern der Sicherung der angehobenen Stellung der Kapp-Sägeeinrichtung 6 insgesamt und der Verschlußstellung der Pendelschutzhaube 14. Nur durch gezielte Betätigung des Schaltelementes 11 soll hier eine Deaktivierung erfolgen können, so daß man das Kreissägeblatt 8 samt Antriebsmotor 7 zur Ausführung eines Kappschnittes nach unten gegen die Werkstückauflagefläche 1 an Basis 2 und Drehteller 3 schwenken kann. Ist das Schaltelement 11 nicht betätigt, so kann man zwar das Einschaltelement 10 betätigen, so daß der Antriebsmotor 7 anläuft und das Kreissägeblatt 8 in Rotation versetzt wird. Da die Pendelschutzhaube 14 aber geschlossen bleibt, besteht für einen Benutzer kaum eine Gefahr. Die beiden Funktionen des Schaltelementes 11 kann man auch miteinander kombinieren.

Fig. 2 zeigt durch Strichelung angedeutet, daß bei der dortigen Ausführungsform das Schaltelement 11 das Bedienteil 13 und einen vom Bedienteil 13 beaufschlagten, im Handgriff 9 versenkten Schaltaufnehmer 15 aufweist. Dieser ist, weil versenkt angeordnet, nur gestrichelt dargestellt. Er ist von außen nicht ohne weiteres erreichbar, so daß sich der gewünschte Sicherungseffekt ergibt.

Bei dem Ausführungsbeispiel von Fig. 3, das insbesondere für die Sperrung der Pendelschutzhaube 14 bestimmt und geeignet ist, ist vorgesehen, daß das Schaltelement 11 ein schwenkbar gelagertes Hebelsystem, hier ein zweiarmiger, mittig schwenkbar gelagerter Hebel ist, dessen Betätigungshebelarm das Bedienteil 13 bildet und abnehmbar ist. Unmittelbar an der Schwenkachse des Hebelsystems befindet sich eine Fassung 16, in die der Betätigungshebelarm, der das Bedienteil 13 bildet, einsteckbar ist. Hat man den Betätigungshebelarm hier herausgezogen, so fehlt das Bedienteil 13, eine Betätigung der Pendelschutzhaube 14 ist ausgeschlossen.

## Patentansprüche

1. Elektrowerkzeug, insbesondere Kappsäge oder Handkreissäge,
mit einem elektrischen Antriebsmotor (7) und einem Handgriff (9),
mit einem von Hand zu betätigenden Einschaltelement (10) für den Antriebsmotor (7), das vorzugsweise als Ziehgriff ausgeführt und/oder am Handgriff (9) angeordnet ist, und
mit einem weiteren von Hand zu betätigenden Schaltelement (11), durch das ohne Handbetätigung das Einschaltelement (10) gesperrt und/oder eine sonstige Sicherungsfunktion des Elektrowerkzeugs aktiviert ist,
**dadurch gekennzeichnet,**
**daß** das Schaltelement (11) ein abnehmbares Bedienteil (13) aufweist und nur bei am Schaltelement (11) vorhandenem Bedienteil (13) das Schaltelement (11) von Hand betätigbar und so das Einschaltelement (10) entsperrbar und/oder die sonstige Sicherungsfunktion des Elektrowerkzeugs deaktivierbar ist.

2. Elektrowerkzeug nach Anspruch 1, **dadurch gekennzeichnet, daß** bei einer Kappsäge oder Handkreissäge das Schaltelement (11) das Sperrelement einer Pendelschutzhaube (14) ist.

3. Elektrowerkzeug nach Anspruch 1 oder 2, **dadurch gekennzeichnet, daß** das Schaltelement (11) das Bedienteil (13) und einen vom Bedienteil (13) beaufschlagten Schaltaufnehmer (15) aufweist, der vorzugsweise im Handgriff (9) versenkt angeordnet ist.

4. Elektrowerkzeug nach Anspruch 1 oder 2, **dadurch gekennzeichnet, daß** das Schaltelement (11) ein schwenkbar gelagertes Hebelsystem ist, dessen Betätigungshebelarm das Bedienteil (13) bildet und vom Hebelsystem im übrigen abnehmbar ist.
